# EUROPÄISCHE PATENTSCHRIFT

(11) **EP 3 111 500 B1**
(45) Veröffentlichungstag und Bekanntmachung des Hinweises auf die Patenterteilung: **20.03.2019**
(21) Anmeldenummer: 15703752.4
(22) Anmeldetag: 30.01.2015
(51) Int. Cl.: H01M 8/0662, H01M 8/2475, H01M 8/04014, H01M 8/04007, H01M 8/0444, H01M 8/04089, B60L 11/18

(54) **BRENNSTOFFZELLENSYSTEM MIT EINEM IN EINEM GEHÄUSE ANGEORDNETEN BRENNSTOFFZELLENSTACK SOWIE EINER MASSNAHME ZUR GEHÄUSE-BELÜFTUNG**
FUEL CELL SYSTEM HAVING A FUEL CELL STACK ARRANGED IN A HOUSING, AND A MEASURE FOR VENTILATING THE HOUSING
SYSTÈME DE PILE À COMBUSTIBLE COMPRENANT UN EMPILAGE D'ÉLÉMENTS DE PILE À COMBUSTIBLE DISPOSÉ DANS UN BOÎTIER, AINSI QUE MOYEN DE VENTILATION DU BOÎTIER

(30) Priorität: 24.02.2014 DE 102014203259
(43) Veröffentlichungstag der Anmeldung: 04.01.2017
(73) Patentinhaber: Bayerische Motoren Werke Aktiengesellschaft, 80809 München (DE)
(72) Erfinder: BAUER, Michael, 85774 Unterföhring (DE); FRIEDRICH, Stephan, 80805 München (DE); FRISCH, Norbert, 82152 Planegg (DE); SCHERRER, Martin, 85586 Poing (DE); SCHMID, Johannes, 81375 München (DE)
(86) Internationale Anmeldenummer: PCT/EP2015/051900
(87) Internationale Veröffentlichungsnummer: WO 2015/124405

(56) Entgegenhaltungen:
- WO-A1-2013/038051
- WO-A2-2014/005793
- DE-A1-102008 016 579
- DE-A1-102010 023 671
- US-A1- 2009 317 692

## Beschreibung

Die Erfindung betrifft ein Brennstoffzellensystem, insbesondere für ein Kraftfahrzeug, mit einem in einem Gehäuse angeordneten Brennstoffzellen-stack sowie einer Maßnahme zur Belüftung dieses Gehäuses unter Koppelung des Belüftungsstroms an einen anderen Gasstrom. Zum Stand der Technik wird auf die Druckschriften DE 10 2008 016 579 A1, WO 2014/005793 A2, WO 2013/038051 A1, DE 10 2010 023671 A1 und US 2009/317692 A verwiesen.

Beispielsweise für den Einsatz in einem Kraftfahrzeug ist es bekannt, einen Brennstoffzellen-Stack in einem im wesentlichen geschlossenen Gehäuse anzuordnen (zu "integrieren"), wobei neben selbstverständlich erforderlichen Durchtrittsöffnungen für medienführende Leitungen auch Belüftungsöffnungen in einer Wand des besagten Gehäuses vorzusehen sind, um dessen Innenraum belüften zu können. Solchermaßen ist also vorliegend der Begriff eines "im wesentlichen geschlossenen" Gehäuses zu verstehen, wobei die vorliegende Erfindung auch mögliche Gehäuse-Strukturen erfassen soll, bei denen keine im wesentlichen geschlossenen Seitenwände vorgesehen sind, sondern mit denen ein zumindest nach oben hin im wesentlichen abgeschlossenen Gehäuse vorliegt, unterhalb von dessen Oberseite sich beispielsweise Wasserstoff, der in geringen Mengen über mögliche LeckageStellen aus den mit dem Brennstoffzellen-Stack verbundenen medienführenden Leitungen austreten könnte, ansammeln kann.
Ein vorliegend als Belüftungsstrom bezeichneter Luftstrom zum Belüften des Gehäuses und Abführen von sich möglicherweise ansammelndem Wasserstoff aus dem Gehäuse wird üblicherweise aus der Umgebung in das Gehäuse eingeleitet und wieder in die Umgebung abgeführt, wobei es wünschenswert ist, für die Förderung dieses Belüftungsstromes keine eigenständige (energieverzehrende) Fördervorrichtung vorsehen zu müssen. In der eingangs genannten Schrift ist daher vorgeschlagen, den aus dem Gehäuse abzuführenden Belüftungsstrom dem Kathoden-Abgasstrom des Brennstoffzellenstacks unter Nutzung des Saugstrahlpumpeneffekts über eine Lavaldüse beizumengen. Der Kathoden-Abgasstrom oder Abgasstrom des Brennstoffzellenstacks bildet somit die Fördervorrichtung für den Belüftungsstrom.

Hiermit soll nun eine weitere Maßnahme aufgezeigt werden, wie ein Belüftungsstrom durch oder aus einem einen Brennstoffzellenstack enthaltenden Gehäuse in günstiger Weise abgeführt werden kann (= Aufgabe der vorliegenden Erfindung).
Die Lösung dieser Aufgabe ist für ein Brennstoffzellensystem nach dem Oberbegriff des Anspruchs 1 dadurch gekennzeichnet, dass der Belüftungsstrom einem durch einen als Umgebungsluft-Wärmetauscher ausgebildeten Kühler des Brennstoffzellensystems geführten Luftstrom zugeführt ist. Dabei ist unter einem Kühler des Brennstoffzellensystems allgemein ein Umgebungsluft-Wärmetauscher zu verstehen, welcher ausgebildet und vorgesehen ist, zumindest Teilkomponenten des Brennstoffzellensystems, bei denen es sich neben dem eigentlichen Stack bspw. auch um die Leistungselektronik des Brennstoffzellensystems handeln kann, zu kühlen. Vorteilhafte Aus- und Weiterbildungen sind Inhalt der Unteransprüche.

Ein erfindungsgemäßes Brennstoffzellensystem weist einen Kühler in Form eines Luft-Kühlfluid-Wärmetauschers auf, wobei das Kühlfluid geeignet bspw. durch den Brennstoffzellenstack geführt ist und dessen Abwärme zumindest anteilig über den Kühler an die Umgebungsluft abgegeben wird. Die den Kühler durchströmende Kühler-Abluft muss dabei geeignet abgeführt werden, so dass hierfür eine irgendwie gestaltete Abluftführung vorgesehen ist. Über diese Abluftführung wird nun auch der hier sog.

Belüftungsstrom vom Brennstoffzellensystem weggeführt, so dass die besagte Abluftführung quasi eine weitere Funktion übernimmt. Dabei ist weiterhin vorgesehen, dass ein Druckgefälle oder dgl., mit Hilfe dessen der Belüftungsstrom zumindest anteilig gefördert wird, durch den durch den Kühler hindurch strömenden Umgebungsluftstrom erzeugt wird.

In Sinne des vorstehenden Satzes wird der Belüftungsstrom stromauf des Kühlers dem durch den Kühler geführten Luftstrom zugeführt oder beigemengt, da stromauf des Kühlers eine gerichtete Strömung, welche nicht durch Lamellenstrukturen oder dgl. des Kühlers gestört ist, anzutreffen ist, welche den Belüftungsstrom nach Art des Saugstrahlpumpenprinzips quasi mitreißt. In diesem Sinne wird eine Entlüftungsöffnung des Gehäuses entsprechend platziert, d.h. vorzugsweise direkt neben dem Strömungsweg des Kühler-Zuluftstroms liegen. Wie üblich ist dann bzw. dabei entweder für den Kühler-Zuluftstrom oder für den Kühler-Abluftstrom, d.h. allgemein für den durch den Kühler hindurch zu führenden UmgebungsLuftstrom, eine geeignete Luftfördervorrichtung in Form eines Lüfters oder dgl. vorhanden, wobei im Falle eines in einem Kraftfahrzeug verbauten erfindungsgemäßen Brennstoffzellensystems bei bewegtem Fahrzeug auch der "Fahrtwind" quasi als Luftfördervorrichtung auch für den Belüftungsstrom des den Brennstoffzellenstack enthaltenden Gehäuses fungiert.
Ähnlich dem eingangs genannten bekannten Stand der Technik kann der Belüftungsstrom des Stack-Gehäuses aber auch einem Abgasstrom des Brennstoffzellenstacks zugeführt oder beigemengt werden, beispielsweise über eine Venturidüse, wobei abermals der Saugstrahlpumpeneffekt zur Förderung des Belüftungsstroms genutzt wird. Erfindungsgemäß ist dann der Abluftstrom des Kühlers mit dem auch den Belüftungsstrom enthaltenden Abgasstrom des Brennstoffzellenstacks zusammengeführt, so dass mehrere Gasströme erfindungsgemäß zusammen oder gemeinsam vom Brennstoffzellensystem weg geführt werden. Dabei kann es sich beim Abgasstrom des Brennstoffzellensystems um den Kathoden-Abgasstrom und/oder den Anoden-Abgasstrom handeln, welche durchaus vorzugsweise stromab der Beimengung des besagten Belüftungsstromes in einem Mischer zusammengeführt sein können.

Weiterhin vorgeschlagen wird, einen Sensor zum Bestimmen des Wasserstoffgehalts in einem Gasstrom stromab der Zuführung des Belüftungsstroms vorzusehen, d.h. mittels eines solchen sog. Wasserstoff-Sensors die Wasserstoffkonzentration in demjenigen Gaststrom, welcher den besagten Belüftungsstrom enthält, zu messen, bei welchem Gasstrom es sich um einen vorstehend genannten Abgasstrom oder um den Kühler-Zuluftstrom oder um den Kühler-Abluftstrom oder um einen mehrere dieser genannten Ströme enthaltenden Misch-Gasstrom handeln kann. Damit kann unter Zuhilfenahme einer elektronischen Überwachungseinheit überprüft werden, ob eine unzulässige Menge von freiem Wasserstoff mit diesem Misch-Gasstrom in die Umgebung gelangen würde und es können ggf. geeignete Maßnahmen hierzu bzw. hiergegen eingeleitet werden. Gegebenenfalls kann mit Hilfe eines solchen Sensors und einer geeigneten elektronischen Überwachungseinheit anhand des von diesem Sensor registrierten Wasserstoffgehalts (= "Sensorsignal") auch ein Rückschluss auf sich möglicherweise innerhalb des besagten Gehäuses frei befindenden Wassersoff gezogen werden. Falls der besagte Gasstrom bereits mit Wasserstoff versetzte Abluft des Brennstoffzellenstacks enthält, ist nämlich die darin vorliegende Wasserstoffkonzentration einer elektronischen Steuereinheit für die Betriebssteuerung des Brennstoffzellenstacks zumindest aus einer Modellrechnung bekannt, weshalb eine höhere als diese bekannte Wasserstoffkonzentration auf zusätzlichen Wasserstoff aus dem Belüftungsstrom hinweist. Grundsätzlich kann somit mittels eines gemäß Anspruch 6 vorgesehenen einzigen Sensors auf einen (weiteren) eigenständigen Wasserstoff-Sensor innerhalb des Gehäuses oder für den Belüftungsstrom alleine verzichtet werden.

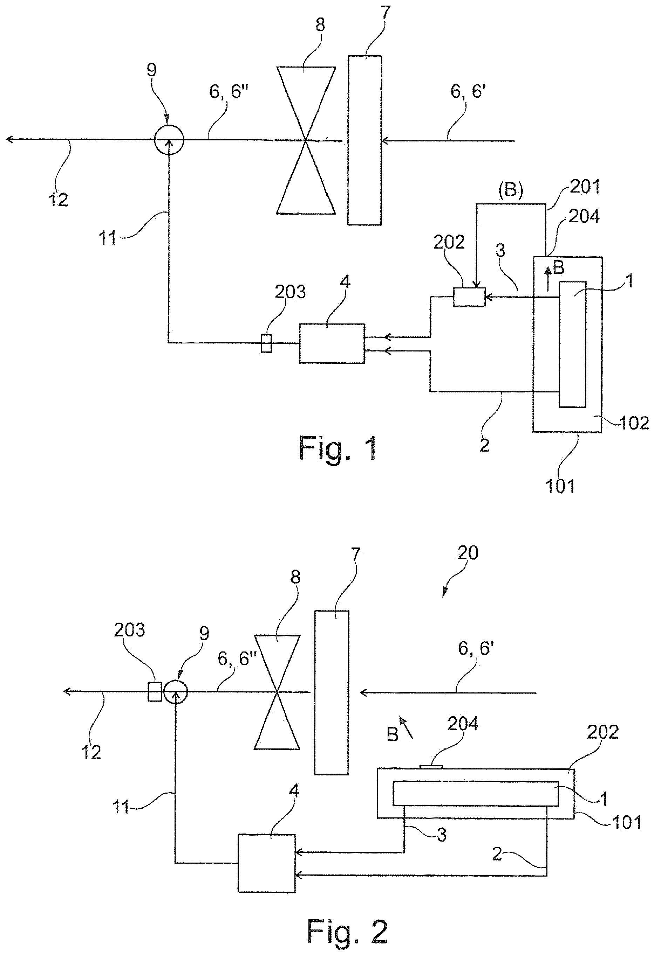

Die beigefügte Figur 2 zeigt auf das wesentliche abstrahiert schematisch ein Ausführungsbeispiel der vorliegenden Erfindung. Die Fig. 1 zeigt eine nützliche Technologie, die nicht Gegenstand der Ansprüche ist. In beiden Figuren sind gleiche Elemente mit den gleichen Bezugsziffern gekennzeichnet.
So trägt ein Brennstoffzellen-Stack die Bezugsziffer 1. Umgeben ist dieser Stack 1 von einem Gehäuse 101, d.h. der Brennstoffzellen-Stack 1 ist innerhalb des Gehäuses 101 angeordnet und befindet sich mit diesem beispielsweise in einem Aggregatgeraum eines Kraftfahrzeugs. Der Einfachheit halber nicht dargestellt ist die Zuführung von gasförmigem Wasserstoff sowie verdichteter Umgebungsluft und ggf. Wasser zur Befeuchtung der dem Fachmann bekannten Brennstoffzellen-Membran (im Falle einer PEM-Brennstoffzelle) zu bzw. in den Brennstoffzellen-Stack 1, wo in bekannter Weise durch Oxidation des Wasserstoffs elektrische Energie erzeugt wird, während die Reaktionsprodukte sowie überschüssige Edukte sowie ein Spülgas, wofür bekanntlich ebenfalls zum größten Teil Wasserstoff zum Einsatz kommt, als Brennstoffzellen-Abgas über eine Abgasleitung 11 abgeführt werden. Dabei geht von den Anodenseiten der mehreren im Brennstoffzellen-Stack 1 übereinander gestapelten Einzel-Brennstoffzellen eine anodenseitige Abgasleitung 2 ab, in welcher der Anoden-Abgasstrom geführt ist, und es geht von den Kathodenseiten der mehreren im Stack 1 übereinander gestapelten Einzel-Brennstoffzellen eine kathodenseitige Abgasleitung 3 ab, in welcher der Kathoden-Abgasstrom geführt ist. In den vorliegenden Beispielen sind die anodenseitige Abgasleitung 2 und die kathodenseitige Abgasleitung 3 über einen Mischer 4 in die (gemeinsame) Abgasleitung 11 des Brennstoffzellensystems zusammengeführt, jedoch ist dies nicht zwingend erforderlich.
Weiterer Bestandteil des Brennstoffzellensystems ist ein Kühler 7 in Form eines Luft-Kühlfluid-Wärmetauschers, durch den ein weiterhin geeignet vorzugsweise durch den Brennstoffzellenstack 1 geführtes Kühlfluid hindurch geführt ist, welches durch einen Luftstrom 6 aus der Umgebung, welcher auch als Kühler-Zuluftstrom 6' bezeichnet wird und durch den Kühler 7 hindurch geführt ist, abgekühlt wird. Gefördert wird der Kühler-Zuluftstrom 6 mittels einer als Lüfter ausgebildeten Luftfördervorrichtung 8, welche hier stromab des Kühlers 7 angeordnet ist und somit genauer den Kühler-Abluftstrom 6" fördert. Dabei kann der Kühler-Abluftstrom 6" innerhalb einer geeigneten einen geschlossenen Querschnitt aufweisenden Luftleiteinrichtung geführt sein; alternativ kann der Kühler-Abluftstrom 6" aber auch durch geeignet geformte Wandungen eines Aggregateraums beispielsweise eines Kraftfahrzeugs, in welchem das Brennstoffzellensystem verbaut ist, gebildet sein.
Der Raum 102 innerhalb des Gehäuses 101, in welchem sich der Brennstoffzellenstack 1 befindet, muss belüftet werden, da sich aufgrund ggf. vorliegender bzw. kaum vollständig auszuschließender minimaler Undichtigkeiten in den Zufuhr- und Abfuhr-Leitungen des Brennstoffzellenstacks 1 ansonsten freier Wasserstoff in höherer Konzentration ansammeln könnte, was unbedingt zu vermeiden ist. Über eine figürlich nicht dargestellte Zufuhröffnung kann somit Umgebungsluft in das Gehäuse gelangen, welche über eine Entlüftungsöffnung 204, welche geeignet in einer Wand des Gehäuses 101 platziert ist, als sog. Belüftungsstrom B aus dem Gehäuse 101 abgeführt wird. Dabei kann dieser abgeführte Belüftungsstrom B in geringem Umfang freien Wasserstoff enthalten, weshalb dieser Belüftungsstrom B gezielt vom Brennstoffzellensystem weg geleitet bzw. wenn dieses System in einem Kraftfahrzeug verbaut ist, gezielt aus dem Kraftfahrzeug heraus geführt werden sollte.

Beim Beispiel nach Fig.1 ist der Belüftungsstrom B innerhalb einer Belüftungsleitung 201 geführt, die von der Entlüftungsöffnung 204 im Gehäuse 101 in die kathodenseitige Abgasleitung 3 führt, und zwar über eine in letzterer vorgesehene Venturi-Düse 202, welche somit unter Nutzung der Strömungsenergie des Kathoden-Abgasstromes nach Art einer Saugstrahlpumpe den Belüftungsstrom B in gewünschter Weise auch innerhalb des Gehäuses 101 sowie in dieses hinein fördert. Weiterhin ist beim Beispiel nach Fig.1 die Abgasleitung 11, in welcher somit auch der aus dem Gehäuse 101 austretende Belüftungsstrom B geführt ist, zum Kühler-Abluftstrom 6" hingeführt und solchermaßen gestaltet, dass der Kühler-Abluftstrom 6 in einem lediglich abstrakt dargestellten Mischbereich 9 mit dem in der Abgasleitung 11 geführten Gaststrom zusammengeführt wird. Über eine sich an den Mischbereich anschließende Gasführung 12, welche in Form einer geeigneten einen geschlossenen Querschnitt aufweisenden Gasleiteinrichtung, alternativ aber auch durch geeignet geformte Wandungen eines Aggregateraums beispielsweise eines Kraftfahrzeugs, in welchem das Brennstoffzellensystem verbaut ist, gebildet sein kann, wird schließlich das Brennstoffzellen-Abgas einschließlich des Belüftungsstromes B und des durch den Kühler 7 geführten Luftstromes 6, 6" gezielt sowie geeignet geführt in die Umgebung abgeführt.
Beim Ausführungsbeispiel nach Fig.2 wird bzw. ist der aus der Entlüftungsöffnung 204 des Gehäuses 101 austretende Belüftungsstrom B dem Kühler-Zuluftstrom 6' zugeführt, indem das Gehäuse 101 bzw. dessen Entlüftungsöffnung 204 sowie der Kühler 7 solchermaßen relativ zueinander angeordnet sind, dass der Kühler-Zuluftstrom 6' mit seiner Strömungsenergie den Belüftungsstrom B über die Entlüftungsöffnung 204 aus dem Gehäuse 101 heraus (und somit auch in dieses hinein) quasi mitreißt bzw. allgemein fördert. Damit wird auch hier der Belüftungsstrom B zusammen mit dem Kühler-Abluftstrom 6" aus dem Brennstoffzellensystem abgeführt, wobei auch hier wieder ein Mischbereich 9 in der Führung des Kühler-Abluftstromes 6" vorgesehen ist, in welcher eine Vermischung des über die Abgasleitung 11 herangeführten Brennstoffzellen-Abgases mit dem Kühler-Abluftstrom 6" erfolgt, was aber nicht zwingend erforderlich ist. Analog dem Beispiel nach Fig.1 wird dieses Gasgemisch auch beim Ausführungsbeispiel nach Fig.2 über eine geeignete Gasführung 12 vom Brennstoffzellensystem weg bzw. aus einem dieses System enthaltenen Kraftfahrzeug heraus geführt.

Bei jedem der gezeigten Beispiele ist ein mit der Bezugsziffer 203 gekennzeichneter Wasserstoff-Sensor vorgesehen, welcher mit einem der geführten Gasströme, welche auch den Belüftungsstrom B beinhalten, in Kontakt kommt, so dass sich mittels einer geeigneten und die Signale des Sensors 203 auswertenden elektronischen Steuer-und Recheneinheit die Wasserstoffkonzentration im jeweiligen Gasstrom (beim Beispiel nach Fig.1 im Abgasstrom und beim Ausführungsbeispiel nach Fig.2 im Summen-Gasstrom stromab des Mischbereichs 9) bestimmen lässt. Beim Ausführungsbeispiel nach Fig.2 kann somit die Wasserstoffkonzentration im einzigen in die Umgebung gelangenden Gasstrom hinsichtlich der Einhaltung eines vorgegebenen Grenzwertes äußerst einfach überwacht werden. Bei einer Anordnung des Wasserstoff-Sensors 203 gemäß dem Beispiel nach Fig.1 ist relativ einfach sogar eine Ermittlung der Wasserstoffkonzentration im Belüftungsstrom B möglich, nachdem die Wasserstoffkonzentration im eigentlichen Brennstoffzellen-Abgas aus Modellrechnungen bekannt ist. Jedenfalls ist aufgrund des Wasserstoffsensors 203 in beiden Fällen (Fig.1, Fig.2) kein eigenständiger Wasserstoffsensor innerhalb des Gehäuses 101 zur Sicherheitsüberwachung erforderlich, wobei noch darauf hingewiesen sei, dass durchaus eine Vielzahl von Details abweichend von obigen Erläuterungen gestaltet sein kann, ohne den Inhalt der Patentansprüche zu verlassen. Beispielsweise kann eine Membran die Entlüftungsöffnung 204 vor einem Wassereintritt bei Gewährleistung der nötigen Gasdurchlässigkeit schützen, so dass hier (und analog an einer Eintrittsöffnung für den Belüftungsstrom B) das Gehäuse durch diese oder ähnliche Maßnahmen gegen einen Eintritt von flüssigem Wasser geschützt ist.

## Patentansprüche

1. Brennstoffzellensystem, insbesondere für ein Kraftfahrzeug, mit einem in einem Gehäuse (101) angeordneten Brennstoffzellenstack (1) sowie einer Maßnahme zur Belüftung dieses Gehäuses (101) unter Koppelung des Belüftungsstroms (B) an einen anderen Gasstrom,
**dadurch gekennzeichnet, dass** der Belüftungsstrom (B) einem durch einen als Umgebungsluft-Wärmetauscher ausgebildeten Kühler (7) des Brennstoffzellensystems geführten Luftstrom (6, 6', 6") zugeführt ist, wobei der Belüftungsstrom (B) stromauf des Kühlers (7) zugeführt ist, und wobei eine Entlüftungsöffnung (204) des Gehäuses (101) solchermaßen platziert ist, dass der Belüftungsstrom (B) durch den Zuluftstrom (6') zum Kühler (7) mitgenommen wird.

2. Brennstoffzellensystem nach Anspruch 1, wobei die Entlüftungsöffnung (204) des Gehäuses direkt neben dem Strömungsweg des Zuluftstroms (6') liegt.

3. Brennstoffzellensystem nach Anspruch 1 oder 2, mit einem Sensor (203) zum Bestimmen des Wasserstoffgehalts in einem Gasstrom stromab der Zuführung des Belüftungsstroms (B) sowie einer elektronischen Überwachungseinrichtung, welche anhand dieses Sensorsignals den Wasserstoffgehalt im Misch-Gasstrom überwacht und/oder einen Rückschluss auf sich möglicherweise innerhalb des Gehäuses (101) frei befindenden Wassersoff zieht.

## Claims

1. A fuel cell system, more especially for a motor vehicle, comprising a fuel cell stack (1) arranged in a housing (101) and a means for ventilating this housing (101) with coupling of the ventilation flow (B) with another gas flow,
**characterised in that** the ventilation flow (B) is supplied to an air flow (6, 6', 6") conducted through a cooler (7) of the fuel cell system designed as an ambient air heat exchanger, wherein the ventilation flow (B) is supplied upstream of the cooler (7), and wherein a ventilation opening (204) of the housing (101) is positioned such that the ventilation flow (B) is entrained by the supply air flow (6') to the cooler (7).

2. A fuel cell system according to claim 1, wherein the ventilation opening (204) of the housing lies directly next to the flow path of the supply airflow (6').

3. A fuel cell system according to claim 1 or 2, comprising a sensor (203) for determining the hydrogen content in a gas flow downstream of the supply of the ventilation flow (B), and comprising an electronic monitoring device which monitors the hydrogen content in the mixed gas flow on the basis of this sensor signal and/or draws a conclusion regarding hydrogen possibly freely situated within the housing (101).

## Revendications

1. Système de piles à combustible, en particulier destiné à un véhicule comprenant un empilement de piles à combustible (1) montées dans un boîtier (101) ainsi que des moyens de ventilation de ce boîtier (101) par couplage du courant de ventilation (B) à un autre courant de gaz,
**caractérisé en ce que**
le courant de ventilation (B) est transféré à un courant d'air (6, 6', 6") passant dans un refroidisseur (7) du système de piles à combustible réalisé sous la forme d'un échangeur de chaleur avec l'air ambiant, le courant de ventilation (B) est transféré en amont du refroidisseur (7), et une ouverture de dégazage (204) du boîtier (101) est positionnée de sorte que le courant de ventilation (B) soit capté par le courant d'air d'entrée (6') vers le refroidisseur (7).

2. Système de piles à combustible conforme à la revendication 1,
dans lequel,
l'ouverture de dégazage (204) du boîtier est située directement à proximité du chemin de circulation du courant d'air d'entrée (6').

3. Système des piles à combustible conforme à la revendication 1 ou 2, comprenant un capteur (203) permettant de déterminer la teneur en hydrogène dans un courant de gaz en aval du transfert du courant d'aération (B) ainsi qu'un dispositif de surveillance électronique qui, sur le fondement du signal du capteur, surveille la teneur en hydrogène dans le courant de gaz mixte et/ou tire une conclusion concernant la présence possible d'hydrogène libre à la partie interne du boîtier (101).
